(19) Europäisches Patentamt
European Patent Office
Office européen des brevets

(11) **EP 3 009 796 B1**

(12) **EUROPEAN PATENT SPECIFICATION**

(45) Date of publication and mention
of the grant of the patent:
**07.03.2018 Bulletin 2018/10**

(51) Int Cl.:
***G01C 21/20*** (2006.01)     ***G01S 5/30*** (2006.01)
***G01S 5/18*** (2006.01)

(21) Application number: **14306649.6**

(22) Date of filing: **17.10.2014**

(54) **System for indoor positioning**

System zur Innennavigation

Système de positionnement intérieur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.04.2016 Bulletin 2016/16**

(73) Proprietor: **ALCATEL LUCENT
92100 Boulogne-Billancourt (FR)**

(72) Inventors:
  • **Ahn, Jong Hoon
    135-798 Seoul (KR)**
  • **LEE, Dae Seok
    608-743 Busan (KR)**

(74) Representative: **Wetzel, Emmanuelle
    Alcatel-Lucent
    Intellectual Property Business Group
    70430 Stuttgart (DE)**

(56) References cited:
**WO-A1-2014/142478     US-A1- 2014 187 258**

• **Riley Bauer ET AL: "A Novel Approach to
Non-GPS Navigation Using Infrasound", , 11
September 2014 (2014-09-11), XP055179543,
Retrieved from the Internet:
URL:http://dsp2002.eng.auburn.edu/files/ac
ad_depts/csse/csse_technical_reports/csse1
4-03.pdf [retrieved on 2015-03-26]**
• **MULLER PHILIPP ET AL: "A field test of
parametric WLAN-fingerprint-positioning
methods", 17TH INTERNATIONAL
CONFERENCE ON INFORMATION FUSION
(FUSION), INTERNATIONAL SOCIETY OF
INFORMATION FUSION, 7 July 2014 (2014-07-07),
pages 1-8, XP032653925, [retrieved on
2014-10-03]**

## Description

FIELD OF THE INVENTION

The present invention relates to positioning systems, and more particularly, to indoor positioning systems.

BACKGROUND

Many positioning systems, like satellite based global positioning systems (GPS), cannot be reliably used in particular environments, such as in indoor environments where GPS signals are not typically able to register due to signal attenuation and reflection cased by building materials. Indoor positioning systems have been developed to overcome the deficiencies of GPS by providing positioning in GPS-deprived environments. However, these indoor positioning systems often lack accuracy or require too resource-intensive computations and/or specialized hardware to be widely employed.

US 2014/187258 A1 relates to wireless communication systems, and more specifically, to position determination methods and apparatus for use with and/or by wireless mobile stations, based on various measured values of environmental conditions such as sound, temperature, pressure, etc.

Riley Bauer et al., entitled "A Novel Approach to Non-GPS Navigation Using Infrasound", relates to alternative and supplemental methods (i.e. non-GPS methods) for navigating unmanned aerial vehicles (UAVs), including the use of infrasonic signals.

WO 2014/142478 A1 relates to an indoor position-data-providing system using sound waves, for determining the current position of a user in possession of a user device including a microphone and speaker.

Muller Philipp et al., entitled "A Field Test Of Parametric WLAN-Fingerprint Positioning Methods", 17th International Conference On Information Fusion (Fusion), International Society Of Information Fusion, 7 July 2014 (2014-07-07), pages 1-8, XP032653925, relates to parametric and non-parametric fingerprint-based positioning methods to determine a reeceiver's position using a database of radio signal strength (RSSI) measurements that were collected earlier at known locations.

SUMMARY

The present invention provides for a system for infrasonic localization of an electronic device in an environment, as claimed in claim 1. Further embodiments of the system are covered by the dependent claims.

These and other embodiments will become apparent in light of the following detailed description herein, with reference to the accompanying drawings.

BRIEF DESCRIPTION OF THE DRAWINGS

FIG. 1 is a schematic diagram of a system according to an embodiment;

FIG. 2 is a schematic diagram of the system of FIG. 1 implemented in an environment;

FIG. 3 is a graph of infrasound detected by the system of FIG. 1 according to an embodiment;

FIG. 4 is a flow diagram of an embodiment for constructing an infrasonic map of the system of FIG. 1;

FIG. 5 is a flow diagram of an embodiment for constructing an infrasonic map of the system of FIG. 1; and

FIG. 6 is a flow diagram of an embodiment for position detection by the system of FIG. 1.

DETAILED DESCRIPTION

Before the various embodiments are described in further detail, it is to be understood that the invention is not limited to the particular embodiments described. It will be understood by one of ordinary skill in the art that the systems and methods described herein may be adapted and modified as is appropriate for the application being addressed and that the systems and methods described herein may be employed in other suitable applications, and that such other additions and modifications will not depart from the scope thereof.

In the drawings, like reference numerals refer to like features of the systems and methods of the present application. Accordingly, although certain descriptions may refer only to certain Figures and reference numerals, it should be understood that such descriptions might be equally applicable to like reference numerals in other Figures.

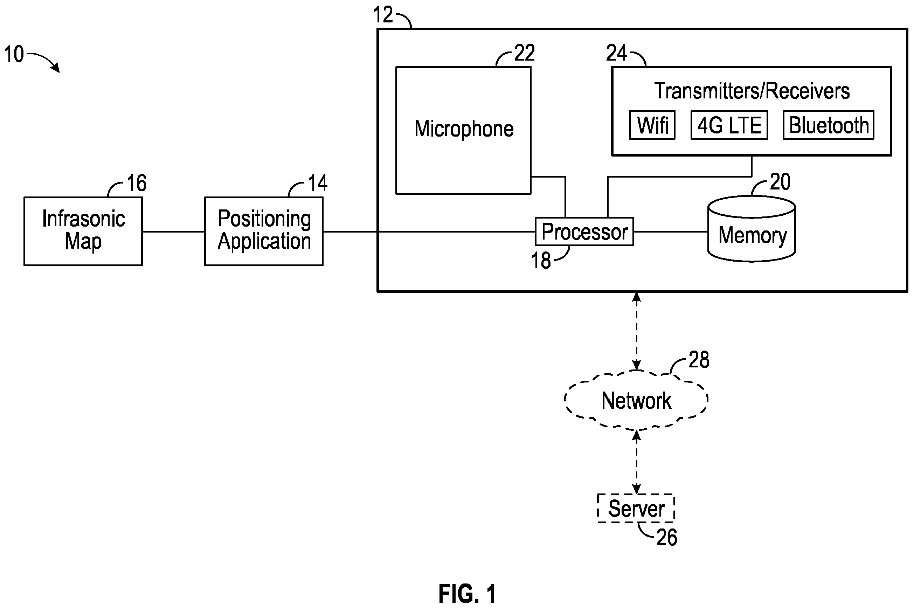

Referring to FIG. 1, an embodiment of a computerized system 10 for providing indoor positioning of an electronic device 12 includes a positioning application 14 and an infrasonic map 16. The electronic device 12 may be, for example, a mobile electronic device such as a smart phone, a cell phone, an electronic tablet, a watch, a wearable computing device, or any other type of electronic device that includes at least one processor 18, memory 20 and a microphone 22. The microphone 22 detects sonic signals and may be integrated into a casing of the electronic device 12, such as in a modern smart phone, or may be apart from and in communication with the electronic device 12 through wired or wireless communication, as should be understood by those skilled in the art. The electronic device 12 may also include one or more communications transmitters/receivers 24 allowing the electronic device 12 to send and/or receive data to and/or from a server 26 over the network 28, as should be understood by those skilled in the art. The server 26 may provide for a publicly accessible cloud service that is accessible by the electronic device 12 and/or other electronic devices.

The computerized system 10 includes the necessary electronics, software, memory, storage, databases, firmware, logic/state machines, microprocessors, communication links, and any other input/output interfaces to perform the functions described herein and/or to achieve the results described herein. For example, the computerized system 10 may include one or more processors and memory, such as the processor 18 and memory 20 of the electronic device 12, which may include system memory, including random access memory (RAM) and read-only memory (ROM). Suitable computer program code may be provided to the computerized system 10 for executing numerous functions, including those discussed in connection with the positioning application 14 and the infrasonic map 16.

For example, in some embodiments, the positioning application 14 and the infrasonic map 16 may both be stored in memory 20 of the electronic device 12 and may be executed and/or accessed by the processor 18 of the electronic device 12. Alternatively, in other embodiments, the positioning application 14 may be stored in memory 20 of the mobile electronic device 12 and may be executed by the processor 18, while the infrasonic map 16 may be stored externally and accessed via a remote computing device, such as the server 26 in communication with the electronic device 12 over the network 28, as should be understood by those skilled in the art. In other embodiments, both the positioning application 14 and the infrasonic map 16 may be stored externally and executed and/or accessed by the electronic device via one or more remote computing devices, such as the server 26 over the network 28, as should be understood by those skilled in the art.

The one or more processors 18 may include one or more conventional microprocessors and may also include one or more supplementary co-processors such as math co-processors or the like. The one or more processors may be configured to communicate with other networks and/or devices such as servers, other processors, computers, cellular telephones, tablets and the like.

The one or more processors 18 may be in communication with the memory, which may comprise magnetic, optical and/or semiconductor memory, such as, for example, random access memory ("RAM"), read only memory ("ROM"), flash memory, optical memory, or a hard disk drive memory. The one or more processors and the memory may be, for example, located in the electronic device 12 or communicatively connected to the electronic device 12 via a communication medium such as a wired or wireless network.

Memory 20 of the electronic device 12 may store sonic data and/or measurements determined or captured using the microphone 22. The memory may also store any other information typically found in computing devices, including an operating system, and/or one or more other programs (e.g., computer program code and/or a computer program product) that are stored in a non-transitory memory portion and adapted to direct the computerized system 10 to perform according to the various embodiments discussed herein. For example, the memory may also store graphical images for outputting mapped data as discussed herein. The positioning application 14 and/or other programs may be stored, for example, in a compressed format, an uncompiled and/or an encrypted format, and may include computer program code executable by the one or more processors. The executable instructions of the computer program code may be read into a main memory of the one or more processors, such as the processor 18, from the memory 20 of the electronic device 12 or a non-transitory computer-readable medium other than the memory 20. While execution of sequences of instructions in the program causes the one or more processors to perform the process steps described herein, hard-wired circuitry may be used in place of, or in combination with, executable software instructions for implementation of the processes of the present invention. Thus, embodiments of the present invention are not limited to any specific combination of hardware and software.

For example, the methods and programs discussed herein may also be implemented in programmable hardware devices such as field programmable gate arrays, programmable array logic, programmable logic devices or the like. Programs may also be implemented in software for execution by various types of computer processors. A program of executable code may, for instance, comprise one or more physical or logical blocks of computer instructions, which may, for instance, be organized as an object, procedure, process or function. Nevertheless, the executables of an identified program need not be physically located together, but may comprise separate instructions stored in different locations which, when joined logically together, comprise the program and achieve the stated purpose for the programs such as providing indoor positioning of the electronic device 12. In an embodiment, an application of executable code may be a compilation of many instructions, which may be distributed over several different code partitions or segments, among different programs, and across several devices.

The term "computer-readable medium" as used herein refers to any medium that provides or participates in providing instructions and/or data to the one or more processors of the computerized system 10 (or any other processor of a device described herein) for execution. Such a medium may take many forms, including but not limited to, non-volatile media and volatile memory. Non-volatile memory may include, for example, optical, magnetic, or opto-magnetic disks, or other non-transitory memory. Volatile memory may include dynamic random access memory (DRAM), which typically constitutes the main memory or other transitory memory.

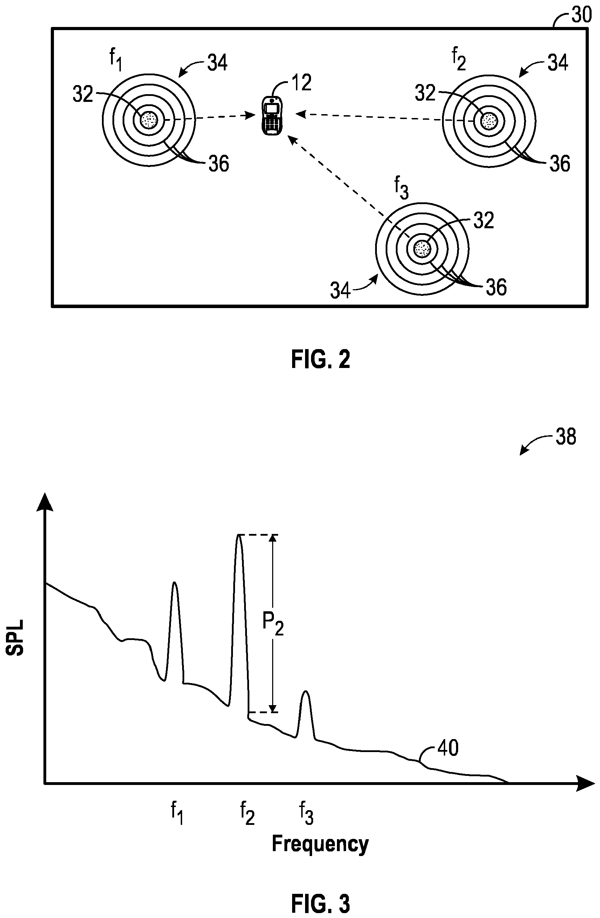

FIG. 2 illustrates an example embodiment for determining the positioning of the electronic device 12 within an environment 30. The environment 30 may be any environment, such as an environment where positioning through GPS is denied, deprived or otherwise, at least partially, unavailable due to poor signal quality or the like. The environment 30 may be an indoor environment such as one or more floors of an office building, shopping mall, subway station, school, airport, residential building, campus or the like.

As shown in FIG. 2, in one embodiment a plurality of infrasonic anchors 32 are placed at known locations within environment 30. The number and the locations of the anchors 32 may be determined based on the size and/or intricacy of the environment 30. For example, in large or intricate environments that include walls or other line of sight obstacles, at least three (3) or more infrasonic anchors 32 may be appropriate, while in other embodiments that are smaller in size or are less intricate a fewer number infrasonic anchors may be acceptable. The infrasonic anchors 32 may be placed in known locations of the environment such that at least one or more of the infrasonic signals 34 generated by the anchors 32 propagate to any given location of the environment 30. Anchors 32 may be implemented as rotary woofers or other similar devices capable of producing infrasonic waves 36. The infrasonic signals 34 comprise infrasound waves, which are sound waves typically having a frequency range of 20 Hz to 0.001 Hz, and are suitable for covering relatively long distances with little attenuation and/or little dissipation due to obstacles. The infrasonic signals 34 may be generated as continuous signals or periodic or non-periodic pulses. The infrasonic signals may be generated using amplitude modulation, frequency modulation, phase modulation, timing differences, and/or other signal encoding techniques to include analog or digital data.

In one embodiment, each infrasonic anchor 32 generates an infrasonic signal 34 that is distinguishable from the infrasonic signals 34 generated by the other infrasonic anchors 32. For example, the infrasonic signals 34 may be generated as pulses having different frequencies $f_1, f_2, f_3, ..., f_n$ within the infrasonic range. In the exemplary embodiment illustrated in FIG. 2, the pulses may be generated at 8 Hz, 10 Hz and 12 Hz. In other embodiments, the signals generated by the infrasonic anchors may include also include data that may identify infrasonic signals provided by one anchor at a given frequency from those provided by other anchors. Although the exemplary embodiments described herein discuss infrasonic waves signals, various other types of wave and signals may be used in combination with the infrasonic waves and signals such as optical, radio, and/or acoustic waves and signals. Additionally, although the computerized system 10 has been described in connection with infrasound waves between 0.001 Hz and 20 Hz, the anchors 32 may also produce near-infrasonic waves that are up to 100Hz and that may still be used to provide positioning in relatively local areas at low intensities.

FIG. 3 illustrates a signature graph 38 representing the propagation of the infrasonic signals 34 produced by the three anchors 32 shown in FIG. 2 for a given spot or location of an indoor environment 30. As seen in FIG. 3, the signature graph may include the detected sound pressure level ("SPL") for a range of infrasonic frequencies including frequencies, and in particular for frequencies $f_1, f_2, f_3$ that are respectively associated with the three anchors 32 of FIG. 2. As seen in FIG. 3, the sound pressure level detected at each of the three frequencies $f_1, f_2, f_3$ can be differentiated from the background noise 40. The detected sound pressure levels from the respective anchors 32 as illustrated in graph 38 may be understood as a unique sound pressure signature for the given spot in the environment 30.

In addition, the sound pressure level detected at each of the three frequencies may vary based on a number of factors, such as the propagation distance between the given spot of the environment and each respective anchor 32, and the number of obstacles between the respective anchors 32 and the given spot, such as walls, ceilings, or other objects. Thus, it is possible that a first anchor 32 that is closer in distance to the given spot may have a lower detected sound pressure level at the given spot than the detected sound pressure level from another anchor 32 that is further away in terms of distance because of the potential obstacles between the respective anchors and the given spot. Possible sources of background infrasonic noise 40 include, for example, pumps, fans, boilers, ventilation plant, blasting, electrical installations, road, rail and/or air traffic, amplified music, cooling towers, wind farms, or the like. Each of these sources of background infrasonic noise 40 may have its own unique characteristic or pattern in the frequency domain.

In embodiments, the total sound pressure level detected by the microphone 22, shown in FIG. 1, including the sound pressure levels of pulses generated by the anchors 32 at the frequencies $f_1, f_2, f_3, ..., f_n$ and the background noise 40, may be represented by a low rank model that may be decomposed by the positioning application 14, shown in FIG. 1, to separate detected sound pressure levels $p_1, p_2, p_3, ..., p_n$ of pulses generated by the anchors 32 at respective frequencies $f_1, f_2, f_3, ..., f_n$ from the background noise 40. For example, an exemplary subspace low rank model may be:

$$x = Uw + Sp$$

where:

   $x$ is the vector of total sound pressure levels detected at the location of the electronic device 12, shown in FIG. 2;

*U* is a matrix whose columns are basis vectors of sources of infrasonic background noise 40;

*w* is a weight vector for the magnitudes of the sources of infrasonic background noise 40;

*S* is a matrix whose columns are known basis vectors of infrasonic anchors 32, shown in FIG. 2; and

*p* is the weight vector of measured pulse pressure levels (e.g. $p_1$, $p_2$, $p_3$, ..., $p_n$).

The matrices *U* and *S* may provide acoustic characteristics, such as a frequency-intensity relation, of background noises and signals, respectively. The number of columns in the matrix *U* may correspond to the potential number of sources of background infrasonic noise 40, which may include noise from a variety of sources as discussed above. Additionally, in embodiments, the matrix *U* may be periodically updated by the positioning application 14, shown in FIG. 1, because sources of infrasonic background noise 40 may be unknown, may move over time (e.g. background noise from vehicles) or may be dynamic and vary over time. For example, the matrix *U* may be updated using a recursive formula where the matrix *U* is given a random initial state or an initial state that is estimated from prior knowledge of known sources of infrasonic background noise 40 and is subsequently updated periodically. In embodiments, the matrix *U* may be updated each time a new vector *p* of pulse pressure levels is computed by the positioning application 14, shown in FIG. 1.

The positioning application 14, shown in FIG. 1, may compute the vectors *w* and *p* and may update the matrix *U* through optimization/decomposition of the low rank model *x = Uw + Sp*. For example, the positioning application 14, shown in FIG. 1, may implement L2-norm minimization for the calculation, wherein the positioning application 14, shown in FIG. 1, may compute the vectors *w* and *p* and may update the matrix *U* for infrasonic sound levels detected at time *t* using the equations:

$$\begin{pmatrix} w_t \\ p_t \end{pmatrix} = \begin{pmatrix} U_t^T U_t & U_t^T S \\ S^T U_t & S^T S \end{pmatrix}^{-1} \begin{pmatrix} U_t^T \\ S^T \end{pmatrix} x_t;$$

and

$$U_t = P_t R_t$$

Where:

$$P_t = \lambda P_{t-1} + (x_t - Sp_t)w_t^T;$$

$$R_t = \frac{1}{\lambda}\left[R_{t-1} - \frac{(R_{t-1}w_t)(R_{t-1}w_t)^T}{\lambda + w_t^T R_{t-1}w_t}\right];$$

and

$$0 < \lambda < 1.$$

In the above set of equations, λ represents a decaying parameter that may be arbitrarily assigned by a user of the computerized system 10, shown in FIG. 1, and may be close in value to 1 (e.g. 0.999). $R_t$ and $P_t$ are matrices for updating the matrix *U* and may have initial values that are randomly (or pseudo-randomly) generated when the positioning application 14, shown in FIG. 1, is initiated at time *t* = 0. Although L2-norm minimization has been described as an exemplary optimization technique, a variety of other conventional optimization techniques may be implemented in positioning application 14, shown in FIG. 1, such as L1-norm minimization or the like, and the specific calculations performed by the positioning application 14, shown in FIG. 1, may depend on the implemented optimization technique, as should be understood by those skilled in the art.

By decomposing the low rank model using the equations discussed above, the positioning application 14, shown in FIG. 1, may separate the infrasound pulses generated by anchors 32 from background noise 40 to calculate the vector $p_t$ of pulse pressure levels $p_1$, $p_2$, $p_3$, ..., $p_n$ generated by the anchors 32 at time *t*. The vector $p_t$ of pulse pressure levels $p_1$, $p_2$, $p_3$, ..., $p_n$ provides a determined sound pressure level signature at the location of the electronic device 12, shown in FIG. 2, at time *t* for the pulse frequencies $f_1$, $f_2$, $f_3$, ..., $f_n$ of the anchors 32, shown in FIG 2.

Any given spot in the environment 30 may be understood as having its own unique sound pressure signature in comparison with any other given spot in the environment. However, given spots in the environment that are relatively further away from each other may be expected to have unique sound pressure signatures that are relatively quite different from each other (low correlation sound signatures). On the other hand, given spots in the environment that are in close proximity (or very close proximity) to each other may be expected to have unique, but similar sound pressure signatures (high correlation sound signatures). A sound signature that has a high (e.g., greater than a first threshold) correlation with another sound pressure signature may be understood as being respectively associated with spots in the environment that are physically close (or very close) to each other. Similarly, a sound pressure signature that has a low (e.g., less than a second threshold) correlation with another sound pressure signature may be understood as being respectively associated with spots in the environment that are physically far (or very far) from each other. A cluster of spots having sound pressure signatures that are highly correlated (e.g., higher than a first threshold) may be understood as defining a positioning area of the environment. The cluster of spots that are associated with the positioning area and the size of the positioning area may be selective varied or determined based on a threshold correlation value to achieve a desired accuracy of the determined positioning of the electronic device in the environment. Thus, it will be understood that in various embodiments unique sound pressure signatures may be associated not only with a particular spot of the environment in view of the disclosure below, but also with respect to particular areas of the environment where the size of the area is selected based on the desired positioning accuracy of the electronic device.

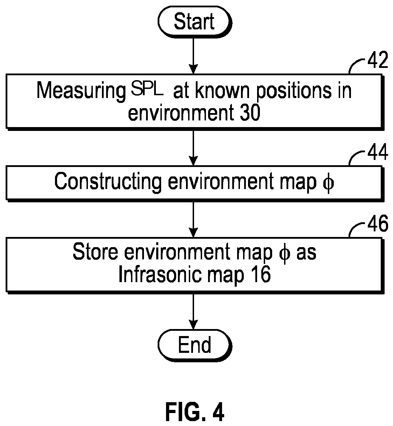

FIG. 4 illustrates an embodiment of a process for generating an infrasonic map 16 for the environment 30. The infrasonic map of the environment 30 is constructed by the computerized system 10 by first determining the unique sound pressure signatures, as discussed above, such as the sound pressure signature shown in graph 38 for corresponding known locations (or areas) of the environment 30, since the known spots (or areas) inside the environment 30 will each have its own unique signature 38 of sound pressure levels based on the factors discussed above. Thus, to construct the infrasonic map 16, at step 42, measurements $p_1, p_2, p_3, ..., p_n$ representing the detected sound pressure level of the infrasonic signals 34 are taken at each of the selected number of known locations $(x_i, y_i)$, $i = 1,2, ...,N$ in the environment 30 at respective frequencies $f_1, f_2, f_3, ..., f_n$ to determine sound pressure signatures for the selected locations. The sound pressure levels $p_1, p_2, p_3, ..., p_n$ may be determined by decomposing the total sound pressure level measured at the known locations $(x_i, y_i)$ into the pressure levels measurements $p_1, p_2, p_3, ..., p_n$ and background noise 40, shown in FIG. 3, using low rank model as discussed above. The number of known locations for which the sound pressure signatures are determined may vary based on the size and intricacy of the environment 30. Although, for clarity, the known locations are designated using two-dimensional Cartesian coordinates $(x_i, y_i)$ in the embodiments discussed herein, this is not a limitation. In other embodiments, the known locations (or areas) of the environment may be represented using three-dimensional Cartesian coordinates, or any other suitable coordinate system (e.g., latitude, longitude, and altitude), as will be appreciated by one of ordinary skill in the art. The sound pressure measurements $p_1, p_2, p_3, ..., p_n$ detected at the respective known locations $(x_i, y_i)$ may be obtained using any device capable of detecting infrasonic sound levels such as the electronic device 12, shown in FIG. 2, or any similar sound detecting device.

At step 44, the computerized system 10 constructs an environment map $\Phi$: $(p_1, p_2, p_3, ... , p_n) \rightarrow (x, y)$ by directly modeling for $x$ and $y$ through a nonlinear dimensionality reduction using the sound pressure level measurements $p_1, p_2, p_3, ..., p_n$ taken at each of the selected number of known locations $(x_i, y_i)$ in the environment 30. For example, the environment map $\Phi$ may be constructed as a parametric model such as:

$$x = g_1(p_1, p_2, \cdots, p_n | \varphi)$$

$$y = g_2(p_1, p_2, \cdots, p_n | \varphi)$$

where $g_1$ and $g_2$ are continuous functions with a parameter set $\varphi$ with regard to $p_1, p_2, ..., p_n$. The functions $g_1$ and $g_2$ may be, for example, polynomials, piecewise polynomials or some other analytical form. The parameter set $\varphi$ of the parametric model contains coefficients determined from the pulse pressure level measurements $p_1, p_2, p_3, ..., p_n$ measured at the sampled known positions $(x_i, y_i)$. Thus, the parametric model relates $x$ and $y$ coordinates in the environment 30 to sound pressure levels in the environment 30 such that the parametric model provides a unique $(x,y)$ position in the environment 30 for a set of sound pressure levels.

At step 46, the computerized system 10 stores the environment map $\Phi$ as the infrasonic map 16. As discussed above, the infrasonic map 16 may be stored in memory 20, shown in FIG. 1, of the electronic device 12, shown in FIG. 1, or may be stored on the remote server 26, shown in FIG. 1, that provides for a publicly accessible cloud service that is accessible by the electronic device 12, shown in FIG. 1, and/or other electronic devices. Once the infrasonic map 16 has been constructed and stored for the particular environment 30 the computerized system 10 may use the infrasonic map 16 to determine or track the position of the electronic device 12 or any other electronic devices 12 that are within or near the environment 30 using sound pressure levels detected in the environment 30.

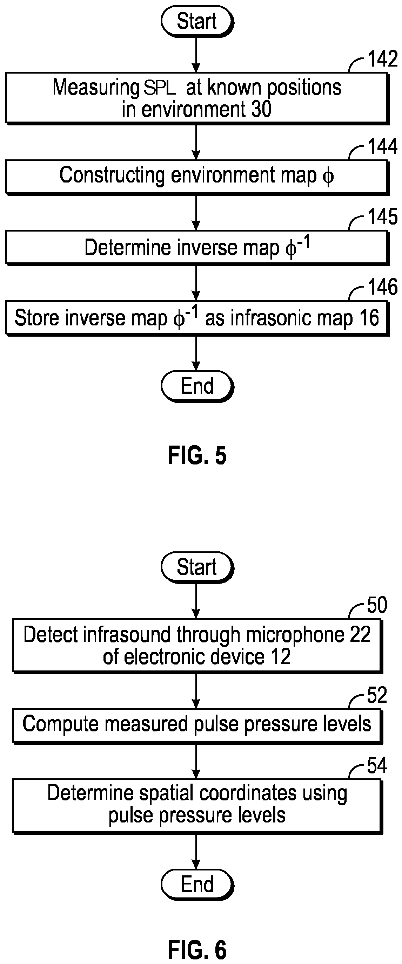

FIG. 5 illustrates another embodiment of a process for generating an infrasonic map 16 for the environment 30 wherein like numerals represent like elements. Like the embodiment described in connection with FIG. 4, the infrasonic map of the environment 30 is constructed by the computerized system 10 by first determining the unique sound pressure signatures such as the sound pressure signature shown in graph 38, shown in FIG. 3, for corresponding known locations (or areas) of the environment 30, since the known spots (or areas) inside the environment 30 will each have its own unique signature 38 of sound pressure levels based on the factors discussed above. Thus, to construct the infrasonic map 16, at step 142, measurements $p_1, p_2, p_3, ..., p_n$ representing the detected sound pressure level of the infrasonic signals 34, shown in FIG. 2, are taken at each of the selected number of known locations $(x_i, y_i)$, $i = 1,2, ...,N$ in the environment 30 at respective frequencies $f_1, f_2, f_3, ..., f_n$ to determine sound pressure signatures for the selected locations. These measurements may be taken in substantially the same manner discussed in connection with step 42 of FIG. 4. For example, the sound

pressure levels $p_1$, $p_2$, $p_3$, ..., $p_n$ may be determined by decomposing the total sound pressure level measured at the known locations $(x_i, y_i)$ into the pressure levels measurements $p_1$, $p_2$, $p_3$, ..., $p_n$ and background noise 40, shown in FIG. 3, using low rank model as discussed above. The number of known locations for which the sound pressure signatures are determined may vary based on the size and intricacy of the environment 30. Although, for clarity, the known locations are designated using two-dimensional Cartesian coordinates $(x_i, y_i)$ in the embodiments discussed herein, this is not a limitation. In other embodiments, the known locations (or areas) of the environment may be represented using three-dimensional Cartesian coordinates, or any other suitable coordinate system (e.g., latitude, longitude, and altitude), as will be appreciated by one of ordinary skill in the art. The sound pressure measurements $p_1$, $p_2$, $p_3$, ..., $p_n$ detected at the respective known locations $(x_i, y_i)$ may be obtained using any device capable of detecting infrasonic sound levels such as the electronic device 12, shown in FIG. 2, or any similar sound detecting device.

Using the data collected in step 142, the computerized system 10 may then construct and generate the infrasonic map of the environment 30 through generative modeling in statistics and probability. Specifically, at step 144, the computerized system 10 constructs an environment map $\Phi$: $(x, y) \rightarrow (p_1, p_2, p_3, \cdots, p_n)$ using the measurement data $p_1$, $p_2$, $p_3$, ..., $p_n$ obtained from the representative known locations $(x_i, y_i)$ of the environment 30 by interpolating the data to correlate sound pressure levels for frequencies $f_1$, $f_2$, $f_3$, ..., $f_n$ to spatial positioning for the entire environment 30. For example, the environment map $\Phi$ may be constructed as a parametric model such as:

$$p_1 = h_1(x, y | \theta)$$
$$p_2 = h_2(x, y | \theta)$$
$$\vdots$$
$$p_n = h_n(x, y | \theta)$$

where $h_1$, $h_2$, ... $h_n$ are continuous functions with a parameter set $\theta$ with regard to x and y. The functions $h_1$, $h_2$, ... $h_n$ may be, for example, polynomials, piecewise polynomials or some other analytical form. The parameter set $\theta$ of the parametric model contains coefficients determined from the pulse pressure level measurements $p_1$, $p_2$, $p_3$, ..., $p_n$ measured at the sampled known positions $(x_i, y_i)$. Thus, the parametric model relates sound pressure level for each frequency $f_1$, $f_2$, ... $f_n$ to x and y coordinates in the environment 30, such that, for any particular $(x,y)$ position in the environment 30, the computerized system 10 may use the environment map $\Phi$: $(x, y) \rightarrow (p_1, p_2, p_3, ..., p_n)$ to calculate a set of interpolated expected sound pressure level at each frequency $f_1$, $f_2$, ... $f_n$.

At step 145, the computerized system 10 determines an inverse map $\Phi^{-1}$: $(p_1, p_2, p_3, ..., p_n) \rightarrow (x, y)$ of the constructed environment map $\Phi$: $(x, y) \rightarrow (p_1, p_2, p_3, ..., p_n)$, which allows the computerized system 10 to interpolate an expected $(x, y)$ position from a measured set of sound pressure levels in the environment 30. The inverse map $\Phi^{-1}$ is the inverse of the environment map $\Phi$ and, therefore, may be constructed by solving the equations for $p_1$, $p_2$, ..., $p_n$ of the environment map $\Phi$ for x and y. Thus, in the exemplary embodiment of the environment map $\Phi$: $(x, y) \rightarrow (p_1, p_2, p_3, ..., p_n)$ above, where the environment map $\Phi$ is a parametric model, the inverse map $\Phi^{-1}$ may also be a parametric model such as:

$$x = g_3(p_1, p_2, \cdots, p_n | \varphi)$$

$$y = g_4(p_1, p_2, \cdots, p_n | \varphi)$$

where $g_3$ and $g_4$ are continuous functions with a parameter set $\varphi$ with regard to $p_1$, $p_2$, ... $p_n$. Like the various functions discussed above, the functions $g_3$ and $g_4$ may be, for example, polynomials, piecewise polynomials or some other analytical form. Thus, the parametric model relates x and y coordinates in the environment 30 to sound pressure levels in the environment 30 such that the parametric model provides a unique spatial $(x, y)$ position for a location in the environment 30 for a set of measured sound pressure levels detected at that position.

At step 146, the computerized system 10 stores the inverse map $\Phi^{-1}$ as the infrasonic map 16. As discussed above, the infrasonic map 16 may be stored in memory 20, shown in FIG. 1, of the electronic device 12, shown in FIG. 1, or may be stored on the remote server 26, shown in FIG. 1, that provides for a publicly accessible cloud service that is accessible by the electronic device 12, shown in FIG. 1, and/or other electronic devices. Once the infrasonic map 16 has been constructed and stored for the particular environment 30 the computerized system 10 may use the infrasonic map 16 to determine or track the position of the electronic device 12 or any other electronic devices 12 that are within or near the environment 30.

Thus, the various embodiments of the infrasonic map 16 provide the unique sound pressure signatures, which correlate a set of pulse pressure levels measured within the environment 30 to a corresponding interpolated location in the environment 30 at which the set of pulse pressure levels was measured using the parameter set $\varphi$, even where the particular location was not one of the sample positions $(x_i, y_i)$.

Using a parametric model for the infrasonic map 16, as in the exemplary embodiments discussed above, advantageously provides a non-linear relationship between the $(x, y)$ coordinates and the sound pressure lev-

els at frequencies $f_1$, $f_2$, ... $f_n$, which allows the infrasonic map 16 to account for distortions in the sound pressure field due to obstacles within the environment 30 such as walls, doors and the like. However, while parametric models have been described in the exemplary embodiments, various other models may be used for the infrasonic map 16. For example, in an environment 30 that does not include obstacles likely to cause distortions, such as an environment that is a single room, warehouse, auditorium or the like, the infrasonic map 16 may be modeled based on trigonometric relations between (x,y) coordinates and the sound pressure levels.

Referring to FIG. 6, in operation, the computerized system 10 provides positioning and mapping of the electronic device 12 as the electronic device 12 is moved within the environment 30. At step 50, the electronic device 12 detects infrasound through the microphone 22 at the particular position of the electronic device 12 as the infrasound propagates within the environment 30. This infrasound may be a combination of the infrasonic signals 34 being generated by the infrasonic anchors 32 and background infrasonic noise, which may be generated by any number of sources as discussed above.

This infrasound detected by the microphone 22 at the location of the electronic device 12 is input to the positioning application 14, shown in FIG. 1, which processes the detected infrasound to compute sound pressure levels $p_1$, $p_2$, $p_3$, ..., $p_n$ at the location of the electronic device 12 from the detected infrasound for the frequencies associated with the anchors 32 in step 52. For example, as discussed above, in embodiments the positioning application 14, shown in FIG. 1, may decompose the subspace low rank model $x = Uw + Sp$ to separate the sound pressure levels $p_1$, $p_2$, $p_3$, ..., $p_n$ generated at the frequencies of interest by the anchors 32 from the background noise 40 represented by the weighted vector $w$. Thus, the positioning application 14, shown in FIG. 1, is able to extract the vector $p_t$ of pulse pressure levels $p_1$, $p_2$, $p_3$, ..., $p_n$ at time $t$ from the total infrasound detected by the microphone 22 using the equations discussed above to determine the sound pressure signature at the location of the electronic device 12 for the frequencies $f_1$, $f_2$, $f_3$, ... $f_n$ of the anchors 32, shown in FIG. 2. In embodiments, the positioning application 14, shown in FIG. 1, may also periodically update the matrix $U$ after computing the vectors $w_t$ and $p_t$ as discussed above.

At step 54, the positioning application 14 determines a set of spatial coordinates $(x_t, y_t)$ for the electronic device 12, shown in FIG. 1, at time $t$ using the vector $p_t$ of pulse pressure levels $p_1$, $p_2$, $p_3$, ..., $p_n$ and the infrasonic map 16, shown in FIG. 1, comprising the inverse map $\Phi^{-1}$, which, as discussed above, correlates pulse pressure levels to spatial coordinates.

Thus, the computerized system 10 provides for determining the position of the electronic device 12 within the environment 30. As should be understood by those skilled in the art, steps 50 through 54 may be repeated periodically at predefined time intervals to update the position of the electronic device 12 or to track the position of the electronic device 12 as the electronic device is moved within the environment 30.

Thus, the computerized system 10 for indoor positioning advantageously enables for the accurate determination of an indoor position of electronic devices. Since infrasonic waves are less affected by the signal attenuation and multiple reflections caused by building materials, the computerized system 10 advantageously provides for more accurate indoor positioning than known indoor positioning systems.

Additionally, the computerized system 10 for indoor positioning should not substantially disturb people operating in the environment 30 since infrasonic waves are substantially undetectable by a human ear.

The computerized system 10 may advantageously be employed in indoor geolocalization products and services for institutions such as airports, shopping malls, museums, campuses, or the like to provide location services, advertisements, product recommendations, security-related services or other similar services inside buildings. For example, the position of the electronic device 12 may be displayed on a screen (not shown) of the electronic device 12 along with a map of the environment 30, shown in FIG. 2, to provide tracking and/or navigation in a manner similar to known outdoor positioning systems.

Although this invention has been shown and described with respect to the detailed embodiments thereof, it will be understood by those of ordinary skill in the art that various changes in form and detail thereof may be made. For example, although the computerized system 10 is described primarily in connection with providing two-dimensional positioning and mapping of a single electronic device 12 in indoor environments for simplicity, the computerized system 10 may also be implemented to provide positioning and mapping for multiple electronic devices 12 and to provide positioning and mapping in a variety of environments, including outdoor environments or environments that include a combination of indoor and outdoor areas and/or to provide three-dimensional positioning and mapping through appropriate placement of the infrasonic anchors 32, as should be understood by those of ordinary skill in the art.

## Claims

1. A system for infrasonic localization of an electronic device in an environment, the system comprising:

   a plurality of infrasound anchors (32) placed at respective locations in the environment, each of said plurality of infrasound anchors being configured to generate an infrasonic signal having a known frequency (f1, f2, ..., fn) that is different from the frequencies of the respective infrasonic signals generated by each of the other infrasound anchors of the plurality of infrasound anchors (32), and an electronic device (12) having a microphone (22) and a processor (18) that is configured to:

determine an infrasound pressure level signature based on infrasound detected at the electronic device (12) using the microphone (22), wherein said detected infrasound includes total sound pressure level (SPL) measurements relating to at least the frequencies (f1, f2,..., fn) of the infrasonic signals, and wherein said determining of the infrasound pressure level signature includes separating sound pressure levels ($p_1$, $p_2$, ..., $p_n$) generated by the infrasound anchors (32) at their respective frequencies (f1, f1, ..., fn) from background noise (40) using a low rank model; and, determine the position of the electronic device (12) based on the determined infrasound pressure level signature and a predetermined infrasound map of the environment, the predetermined infrasound map representing measured pressure levels, for at least the frequencies (f1, f2, ..., fn) of the infrasonic signals (34) generated by the infrasound anchors (32), at a plurality of known locations in the environment.

2. The system of claim 1, wherein the predetermined infrasound map of the environment is determined as a parametric model stored in a memory associated with the electronic device(12).

3. The system of claim 1, wherein the processor (18) is configured to periodically update or track the position of the electronic device (12) in the environment by periodically determining the set of infrasound pressure levels for the predetermined set of infrasound frequencies using the low rank model.

4. The system of claim 1, wherein the processor (18) is further configured to periodically update the low rank model based on one or more sources of background infrasonic noise.

5. The system of claim 4, wherein the processor (18) is configured to update the low rank model based on the one or more sources of background noise each time the position of the electronic device (12) is updated.

6. The system of claim 1, wherein the processor (18) is further configured to periodically update or track the position of the electronic device (12) in the environment.

7. The system of claim 1, wherein the processor (18) is further configured to display the position of the electronic device (12) on a user interface.

8. The system of claim 1, wherein the processor (18) is adapted to periodically update or track the position of the electronic device (12) in the environment by periodically determining the infrasound signature for the electronic device based on infrasound detected at the electronic device (12).

**Patentansprüche**

1. System für die Infraschal-Lokalisierung eines elektronischen Geräts in einer Umgebung, wobei das System umfasst:

eine Vielzahl von Infraschall-Ankern (32), die an entsprechenden Orten in der Umgebung platziert sind, wobei jeder besagter Vielzahl von Infraschall-Ankern konfiguriert ist zum Erzeugen eines Infraschall-Signals, das eine bekannte Frequenz (f1, f2, ..., fn) aufweist, die verschieden ist von den Frequenzen der entsprechenden Infraschall-Signale, die von jedem der anderen Infraschall-Anker der Vielzahl von Infraschall-Ankern (32) erzeugt werden, und ein elektronisches Gerät (12), das ein Mikrofon (22) und einen Prozessor (18) aufweist, und das konfiguriert ist:

zum Bestimmen einer Infraschalldruckpegel-Signatur auf Grundlage des Infraschalls, der an dem elektronischen Gerät (12) unter Verwenden des Mikrofons (22) erkannt wird, wobei besagter erkannter Infraschall einschließt die gesamten Schalldruckpegel-Messungen (SPL), die sich mindestens auf die Frequenzen (f1, f2, ..., fn) der Infraschall-Signale beziehen, und wobei besagtes Bestimmen der Infraschalldruckpegel-Signatur einschließt das Trennen der Schalldruckpegel (p1, p2, ..., $p_n$), die von den Infraschall-Ankern (32) mit ihren entsprechenden Frequenzen (f1, f2, ..., fn) aus dem Hintergrundrauschen (40) erzeugt werden unter Verwenden eines Low-Rank-Modells; und zum Bestimmen der Position des elektronischen Geräts (12) auf Grundlage der bestimmten Infraschalldruckpegel-Signatur und einer vorbestimmten Infraschall-Karte der Umgebung, wobei die vorbestimmte Infraschall-Karte gemessene Druckpegel mindestens für die Frequenzen (f1, f2, ..., fn) der Infraschall-Signale (34) darstellt, die von den Infraschall-Ankern (32) an einer Vielzahl bekannter Orte in der Umgebung erzeugt werden.

**2.** System nach Anspruch 1, wobei die vorbestimmte Infraschall-Karte der Umgebung bestimmt wird als ein parametrisches Modell, das in einem Speicher abgelegt wird, der mit dem elektronischen Gerät (12) verbunden ist.

**3.** System nach Anspruch 1, wobei der Prozessor (18) konfiguriert ist zum periodischen Aktualisieren oder Verfolgen der Position des elektronischen Geräts (12) in der Umgebung durch periodisches Bestimmen des Satzes von Infraschalldruckpegeln für den bestimmten Satz von Infraschall-Frequenzen unter Benutzen des Low-Rank-Modells.

**4.** System nach Anspruch 1, wobei der Prozessor (18) konfiguriert ist zum periodischen Aktualisieren des Low-Rank-Modells auf Grundlage einer oder mehrerer Quellen von Infraschall-Hintergrundgeräuschen.

**5.** System nach Anspruch 4, wobei der Prozessor (18) konfiguriert ist zum Aktualisieren des Low-Rank-Modells auf Grundlage der einen oder der mehreren Quellen von Hintergrundgeräuschen jedes Mal, wenn die Position des elektronischen Geräts (12) aktualisiert wird.

**6.** System nach Anspruch 1, wobei der Prozessor (18) weiterhin konfiguriert ist zum periodischen Aktualisieren oder Verfolgen der Position des elektronischen Geräts (12) in der Umgebung.

**7.** System nach Anspruch 1, wobei der Prozessor (18) weiterhin konfiguriert ist zum Anzeigen der Position des elektronischen Geräts (12) auf einer Benutzerschnittstelle.

**8.** System nach Anspruch 1, wobei der Prozessor (18) ausgelegt ist zum regelmäßigen Aktualisieren oder Verfolgen der Position des elektronischen Geräts (12) in der Umgebung durch periodisches Bestimmen der Infraschall-Signatur für das elektronische Gerät auf Grundlage eines Infraschalls, der an dem elektronischen Gerät (12) bestimmt wird.

**Revendications**

**1.** Système de localisation infrasonore d'un appareil électronique au sein d'un environnement, le système comprenant :

une pluralité de sources d'infrasons fixes (32) placées à des positions respectives au sein de l'environnement, chaque source d'infrasons fixe de ladite pluralité de sources d'infrasons fixes étant configurée pour générer un signal infrasonore de fréquence connue (f1, f2...fn) différente des fréquences des signaux infrasonores respectifs générés par chacune des autres sources d'infrasons fixes de la pluralité de sources d'infrasons fixes (32), et

un appareil électronique (12) doté d'un microphone (22) et d'un processeur (18) qui est configuré pour :

déterminer une signature de niveau de pression d'infrason d'après les infrasons détectés au niveau de l'appareil électronique (12) à l'aide du microphone (22), lesdits infrasons détectés incluant des mesures de niveau de pression acoustique (SPL) totale relatives au moins aux fréquences (f1, f2...fn) des signaux infrasonores, et ladite détermination de la signature de niveau de pression d'infrason incluant la séparation des niveaux de pression acoustique (p1, p2...pn) générés par les sources d'infrasons fixes (32) à leurs fréquences respectives (f1, f2...fn) du bruit de fond (40) à l'aide d'un modèle de faible niveau ; et, déterminer la position de l'appareil électronique (12) d'après la signature de niveau de pression d'infrason déterminée et d'une carte d'infrasons prédéterminée de l'environnement, la carte d'infrasons prédéterminée représentant les niveaux de pression mesurés, pour au moins les fréquences (f1, f2...fn) des signaux infrasonores (34) générés par les sources d'infrasons fixes (32), au niveau d'une pluralité de positions connues au sein de l'environnement.

**2.** Système selon la revendication 1, dans lequel la carte d'infrasons prédéterminée de l'environnement est déterminée sous forme de modèle paramétrique stocké dans une mémoire associée à l'appareil électronique (12).

**3.** Système selon la revendication 1, dans lequel le processeur (18) est configuré pour mettre à jour ou suivre périodiquement la position de l'appareil électronique (12) au sein de l'environnement en déterminant périodiquement l'ensemble des niveaux de pression d'infrason pour l'ensemble prédéterminé de fréquences d'infrason à l'aide du modèle de faible niveau.

**4.** Système selon la revendication 1, dans lequel le processeur (18) est en outre configuré pour mettre à jour périodiquement le modèle de faible niveau d'après une ou plusieurs sources de bruit de fond infrasonore.

**5.** Système selon la revendication 4, dans lequel le processeur (18) est configuré pour mettre à jour le modèle de faible niveau d'après la ou les sources de bruit de fond chaque fois que la position de l'appareil électronique (12) est mise à jour.

**6.** Système selon la revendication 1, dans lequel le processeur (18) est en outre configuré pour mettre à jour ou suivre périodiquement la position de l'appareil électronique (12) au sein de l'environnement.

**7.** Système selon la revendication 1, dans lequel le processeur (18) est en outre configuré pour afficher la position de l'appareil électronique (12) sur une interface utilisateur.

**8.** Système selon la revendication 1, dans lequel le processeur (18) est adapté pour mettre à jour ou suivre périodiquement la position de l'appareil électronique (12) au sein de l'environnement en déterminant périodiquement la signature d'infrason de l'appareil électronique d'après les infrasons détectés au niveau de l'appareil électronique (12).

**FIG. 1**

EP 3 009 796 B1

**FIG. 2**

**FIG. 3**

Start

Measuring SPL at known positions in
environment 30 ⌐42

Constructing environment map φ ⌐44

Store environment map φ as
Infrasonic map 16 ⌐46

End

**FIG. 4**

Start

*142*

Measuring SPL at known positions
in environment 30

*144*

Constructing environment map $\phi$

*145*

Determine inverse map $\phi^{-1}$

*146*

Store inverse map $\phi^{-1}$ as infrasonic map 16

End

**FIG. 5**

Start

*50*

Detect infrasound through microphone 22
of electronic device 12

*52*

Compute measured pulse pressure levels

*54*

Determine spatial coordinates using
pulse pressure levels

End

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014187258 A1

- WO 2014142478 A1

**Non-patent literature cited in the description**

- **RILEY BAUER et al.** *A Novel Approach to Non-GPS Navigation Using Infrasound*

- A Field Test Of Parametric WLAN-Fingerprint Positioning Methods. **MULLER PHILIPP et al.** 17th International Conference On Information Fusion (Fusion). International Society Of Information Fusion, 07 July 2014, 1-8